# EUROPÄISCHE PATENTANMELDUNG

(11) **EP 3 176 020 A1**
(43) Veröffentlichungstag der Anmeldung: **07.06.2017**
(21) Anmeldenummer: 16198307.7
(22) Anmeldetag: 11.11.2016
(51) Int. Cl.: B60K 6/12, F02B 21/02

(54) **VORRICHTUNG UND VERFAHREN ZUM UMWANDELN UND SPEICHERN VON ENERGIE FÜR EIN FAHRZEUG UND FAHRZEUG MIT EINER DERARTIGEN VORRICHTUNG**

(30) Priorität: 02.12.2015 DE 102015224063
(71) Anmelder: ZF Friedrichshafen AG, 88046 Friedrichshafen (DE)
(72) Erfinder: Bauernfeind, Markus, 91257 Pegnitz (DE); Häuslmann, Mathias, 92224 Amberg (DE)

(57) **Zusammenfassung**

Eine Vorrichtung zum Umwandeln und Speichern von Energie für ein Fahrzeug (1) umfasst ein Druckluftaggregat (17) zum Verdichten von Luft (30) in Druckluft (31), und ein mit dem Druckluftaggregat (17) über eine Druckluftleitung (18) verbundener Druckluftspeicherbehälter zum Speichern der Druckluft (31), wobei der Druckluftspeicherbehälter durch mindestens eine Fahrzeugkomponente gebildet ist.

## Beschreibung

Die Erfindung betrifft eine Vorrichtung und ein Verfahren zum Umwandeln und Speichern von Energie für ein Fahrzeug sowie ein Fahrzeug mit einer derartigen Vorrichtung.

Aus DE 195 08 074 C1 sind ein Verfahren und eine Vorrichtung zur Energieumwandlung und Energiespeicherung für ein Kraftfahrzeug mit Verbrennungsmotor bekannt. Bewegungsenergie des ausrollenden Kraftfahrzeugs wird dadurch genutzt, dass die auf den Motor übertragene Bewegung zur Komprimierung von Luft dient und die komprimierte Luft in einem Druckluftbehälter gespeichert werden kann. Der Druckluftbehälter erfordert zusätzlichen Bauraum. Der Druckluftbehälter weist ein Eigengewicht auf. Zusätzlicher Bauraum und Gewicht sind bei der Entwicklung von Fahrzeugen, insbesondere von Automobilen, insbesondere hinsichtlich des Kraftstoffverbrauchs und der Schadstoffemissionen, unerwünscht.

Die Aufgabe der Erfindung besteht darin, eine Vorrichtung und ein Verfahren zum Umwandeln und Speichern von Energie für ein Fahrzeug zu verbessern.

Zur Lösung dieser Aufgabe wird eine Vorrichtung entsprechend den Merkmalen des Patentanspruchs 1, ein Fahrzeug entsprechend den Merkmalen des Patentanspruchs 12 sowie ein Verfahren entsprechend den Merkmalen des Patentanspruchs 13 angegeben. Erfindungsgemäß wurde erkannt, dass mindestens eine Fahrzeugkomponente als Druckluftspeicherbehälter genutzt werden kann. Ein zusätzlicher Druckluftspeicherbehälter ist dadurch entbehrlich. In heutigen Fahrzeugen, insbesondere Kraftfahrzeugen wie Automobilen, weisen Fahrzeugkomponenten Hohlräume auf, die grundsätzlich zur Speicherung von Druckluft geeignet sind. Der Erfindung liegt die Erkenntnis zugrunde, dass diese Hohlräume als Druckluftspeicherbehälter nutzbar sind. Dadurch ist es möglich, in Druckluft gewandelte Energie unmittelbar und effektiv zu speichern. Zum Verdichten von Luft in Druckluft dient ein Druckluftaggregat, das über eine Druckluftleitung mit dem Druckluftspeicherbehälter verbunden ist. Mit dem Druckluftaggregat kann die Luft mit einem Verdichtungsverhältnis von bis zu 400:1 verdichtet werden. Insbesondere kann die Luft stufenlos bis zu einem Verdichtungsverhältnis von 400:1 verdichtet werden. Die Druckluft liegt somit mit einem Druck von bis zu 400 bar vor und wird mit diesem Druck im Druckluftspeicherbehälter gespeichert. Zusätzlicher Bauraum ist nicht erforderlich. Ein zusätzlicher Druckluftspeicherbehälter, der das Gesamtgewicht des Fahrzeugs erhöhen würde, ist entbehrlich. Mit der erfindungsgemäßen Vorrichtung können im Fahrzeug bereits vorhandene Fahrzeugrahmenelemente als Druckluftspeicherbehälter genutzt werden. Es sind allenfalls unaufwändige konstruktive Umgestaltungen erforderlich. Insbesondere sind zusätzliche Speicherbehälter entbehrlich. Durch die Integration der Druckluftspeicherbehälter entsteht kein Bauraumverlust. Eine Einspeisung von Luft zur Verdichtung von Druckluft kann bei jeglichem Energieüberschuss im Fahrzeug erfolgen, insbesondere bei einem Brems-Verzögerungs-Vorgang, ohne dass die Lebensdauer der Speicherkomponenten beansprucht wird. Die Druckluftspeicherung ist im Prinzip beliebig oft wiederholbar. Ein Ausfall von Bauteilen während der Lebensdauer eines Fahrzeugs ist nicht zu erwarten. Darin liegt ein wesentlicher Vorteil der Druckluftspeicherung gegenüber Batterien zur Speicherung elektrischer Energie. Die Speicherung von Druckluft ist zeitlich im Wesentlichen unbegrenzt möglich. Sofern überhaupt zusätzliche Komponenten erforderlich sind, handelt es sich dabei um unaufwändige und kosteneffektive Bauteile. Insbesondere handelt es sich um Standardbauteile wie Ventile oder Pumpen. Dadurch, dass die gespeicherte Druckluft unmittelbar dem Verbrennungsmotor wieder zugeführt wird, ergibt sich eine verbesserte Betriebsweise, die insbesondere zu einer Einsparung von Treibstoff und damit zu einer Einsparung von Abgasemissionen führt. Die erfindungsgemäße Vorrichtung ist aber unabhängig von dem Antriebskonzept des Fahrzeugs. Die Vorrichtung ist sowohl für Elektrofahrzeuge, Hybridfahrzeuge als auch konventionelle Verbrennungsmotor-Fahrzeuge anwendbar.

Vorteilhafte Ausgestaltungen der Vorrichtung ergeben sich aus den Merkmalen der von Patentanspruch 1 abhängigen Ansprüche.

Eine Vorrichtung gemäß Anspruch 2, bei der die mindestens eine Fahrzeugkomponente ein Fahrzeugrahmenelement und/oder eine Fahrzeugtür ist, bietet ein großes Speichervolumen. Als Fahrzeugrahmenelement dient beispielsweise ein Einstiegsrahmenelement, das auch als Schweller bezeichnet wird, insbesondere im seitlichen Fußbereich zwischen den Vorder- und Hinterrädern des Fahrzeugs. Als Fahrzeugrahmenelement kann beispielsweise auch ein Rahmen einer Frontscheibe mit einer sogenannten A-Säule und/oder ein Rahmen einer Heckscheibe mit einer sogenannten C- oder D-Säule genutzt werden. Auch ein Seitenrahmenelement mit einer sogenannten B-Säule kann ein Fahrzeugrahmenelement sein. Insbesondere können mehrere Fahrzeugrahmenelemente als Druckluftspeicherbehälter genutzt werden. Grundsätzlich ist jeder Hohlraum im Fahrzeug als Druckluftspeicherbehälter nutzbar. Vorteilhaft ist es deshalb, wenn die Querschnittsgeometrie von Rahmenbauteilen, insbesondere von Hohlprofil-Elementen, derart optimiert ist, dass bei gleicher Steifigkeit und Stabilität die Querschnittsfläche, also das Innenvolumen, maximiert ist. Derartige Rahmen-Elemente sind rohrförmige Teile. Rohrförmig bedeutet, dass sich die Rahmen-Elemente entlang einer geraden, gebogenen oder abknickenden Längsachse erstrecken und einen im Wesentlichen konstanten Querschnitt aufweisen. Die Querschnittsfläche und/oder die Querschnittskontur des Rahmen-Elements kann rund oder eckig und insbesondere unregelmäßig geformt sein. Ein Rahmen-Element ist beispielsweise aus Stahl, insbesondere aus hochfestem Stahl, aus einer Aluminiumlegierung oder aus verstärktem Kunststoffmaterial, insbesondere aus kohlefaserverstärktem Kunststoffmaterial, hergestellt. Diese Materialien gewährleisten eine ausreichende Stabilität des Rahmen-Elements für die gefahrlose Speicherung von Druckluft.

Ein Druckluft-Absperrventil gemäß Anspruch 3 gewährleistet eine kontrollierte Druckluftförderung entlang der Druckluftleitung. Insbesondere ist das DruckluftAbsperrventil schaltbar, um ein Absperren der Druckluftverbindung zwischen dem Druckluftaggregat und dem Druckluftspeicherbehälter gezielt, insbesondere gesteuert, zu beeinflussen.

Ein Zusatz-Verdichtungselement gemäß Anspruch 4 ermöglicht eine erhöhte Speicherdichte. Mit dem Zusatz-Verdichtungselement kann die bereits verdichtete Druckluft nachträglich zusätzlich verdichtet werden. Die nachverdichtete Druckluft kann einen Druck von bis zu 400 bar aufweisen. Mit dem Zusatz-Verdichtungselement ist es möglich, die bereits verdichtete Druckluft stufenlos nachträglich auf bis zu 400 bar zu verdichten. Das erforderliche Speichervolumen ist reduziert. Als Zusatz-Verdichtungselement kann beispielsweise eine im Fahrzeug bereits vorhandene Pumpe genutzt werden. Zusätzlicher apparativer Aufwand ist dann nicht erforderlich. Alternativ kann eine separate Pumpe zum Nachverdichten der Druckluft in das Fahrzeug integriert werden. Die Pumpe kann beispielsweise von einer Wärmekraftmaschine des Fahrzeugs und/oder von einem Elektromotor im Fahrzeug angetrieben werden. Alternativ kann die zusätzliche Pumpe als Nebenaggregat des Fahrzeuggetriebes angetrieben werden. Als Zusatz-Verdichtungselement ist auch ein Kompressor möglich. Das Zusatz-Verdichtungselement ist insbesondere entlang der Druckluftleitung zwischen dem Druckluftaggregat und dem Druckluftspeicherbehälter angeordnet.

Ein Verbrennungsmotor als Druckluftaggregat gemäß Anspruch 5 ermöglicht eine effektive Nutzung der im Fahrzeug vorhandenen Komponenten zum Umwandeln und Speichern der Energie. Der Verbrennungsmotor ermöglicht unmittelbar das Verdichten der Luft zu Druckluft. Zusätzliche Komponenten sind entbehrlich. Bei einem derartigen Fahrzeug ist es lediglich erforderlich, den Verbrennungsmotor als Druckluftaggregat mit der Druckluftleitung mit der mindestens einen Fahrzeugkomponente zu verbinden. Die Druckluftleitung ist insbesondere an einer Abgasöffnung des Verbrennungsmotors angeschlossen. Die Druckluftleitung dient zum Abführen von Abgas aus dem Verbrennungsmotor.

Eine Abgasleitung gemäß Anspruch 6 gewährleistet die zuverlässige Abführung von Abgasen des Verbrennungsmotors, insbesondere wenn das Einlagern von Druckluft nicht erfolgen soll. Insbesondere ist entlang der Abgasleitung ein Abgas-Absperrventil angeordnet, um die Abgasleitung abzusperren. Insbesondere ist das Abgas-Absperrventil schaltbar ausgeführt.

Eine Rückführleitung gemäß Anspruch 7 gewährleistet eine unmittelbare Rückführung der gespeicherten Druckluft aus dem Druckluftspeicherbehälter in den Verbrennungsmotor. Insbesondere ist die Rückführleitung separat und insbesondere getrennt von der Druckluftleitung ausgeführt.

Die Rückführleitung ist an einer Zuführöffnung des Verbrennungsmotors angeschlossen. Die Rückführleitung dient zum Zuführen von gespeicherter Druckluft in den Verbrennungsmotor. Entlang der Rückführleitung ist insbesondere ein Rückführ-Absperrventil angeordnet. Das Rückführ-Absperrventil dient zum Absperren der Rückführleitung. Das Rückführ-Absperrventil ist insbesondere schaltbar ausgeführt.

Eine Ansaugleitung gemäß Anspruch 8 dient zum Zuführen von Ansaugluft in den Verbrennungsmotor. Die Ansaugleitung ist insbesondere an die Rückführleitung angeschlossen. Entlang der Ansaugleitung ist insbesondere ein Ansaug-Absperrventil angeordnet. Das Ansaug-Absperrventil dient zum Absperren der Ansaugleitung. Das Ansaug-Absperrventil ist insbesondere schaltbar ausgeführt.

Alternativ kann das Druckluftaggregat gemäß Anspruch 9 auch als Verdichtungselement ausgeführt sein. Ein Verdichtungselement im Sinne des Anspruchs 9 ist insbesondere eine Pumpe, ein Kompressor oder ein Verdichter. Der Vorteil dieser Ausführungsform ist darin zu sehen, dass elektrische Energie, die beispielsweise aus überschüssiger kinetischer Energie mittels Rekuperation umgewandelt worden ist, nicht in einer Batterie gespeichert werden muss, sondern zum Antreiben des Verdichtungselements genutzt werden kann. Das Verdichtungselement verdichtet Luft zu Druckluft, die, wie vorstehend beschrieben, zur Speicherung in den Druckluftspeicherbehälter eingelagert wird. Wesentlich bei dem Verdichtungselement ist, dass zur Energierückgewinnung unmittelbar genutzt werden kann, um die komprimierte Druckluft wieder zu entspannen, indem das Verdichtungselement als Entspannungselement zu nutzen. Das Entspannen der Druckluft mittels des Verdichtungselements bewirkt ein Antreiben einer drehbaren Komponente in dem Verdichtungselement, insbesondere ein Schaufelrad, so dass die entspannte Druckluft in kinetische Energie rückgewandelt wird, die in elektrische Energie umgewandelt werden kann. Entsprechend kann bei einem als Kompressor ausgeführten Verdichtungselement die Druckluft in Form des Expansionsvolumens genutzt werden.

Eine Druckluftleitung gemäß Anspruch 10 ermöglicht eine effektive Anbindung des Druckluftspeicherbehälters an das Druckluftaggregat. Die Druckluftleitung ermöglicht eine bidirektionale Druckluftförderung, also von dem Druckluftaggregat zu dem Druckluftspeicherbehälter und von dem Druckluftspeicherbehälter zu dem Druckluftaggregat. Eine separate, zweite Leitung ist entbehrlich.

Ein Generator gemäß Anspruch 11 ermöglicht unmittelbar die Umwandlung der von der expandierten Druckluft verursachten kinetischen Energie in elektrische Energie.

Ein Fahrzeug mit einer erfindungsgemäßen Vorrichtung weist im Wesentlichen die Vorteile der Vorrichtung selbst auf, worauf hiermit verwiesen wird.

Bei einem Verfahren zum Umwandeln und Speichern von Energien in dem Fahrzeug wird überschüssige, insbesondere kinetische, Energie des Fahrzeugs rekuperiert, indem Luft zu Druckluft in dem Druckluftaggregat verdichtet wird. Die Druckluft wird über eine Druckluftleitung in einen Druckluftspeicherbehälter gefördert und dort gespeichert.

Ein Rückführen der gespeicherten Druckluft gemäß Anspruch 14 gewährleistet eine Rückgewinnung der gespeicherten Energie.

Ein Umwandeln der gespeicherten Druckluft gemäß Anspruch 15 ermöglicht das Vorliegen der gespeicherten Energie in einer vorteilhaft nutzbaren Energieform, insbesondere in Form kinetischer Energie und/oder in Form elektrischer Energie.

Sowohl die in den Patentansprüchen angegebenen Merkmale als auch die in den nachfolgenden Ausführungsbeispielen der erfindungsgemäßen Vorrichtungen angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung von Ausführungsbeispielen anhand der Zeichnung. Es zeigen:
Fig. 1 eine schematische Seitenansicht eines Fahrzeugs mit einer erfindungsgemäßen Vorrichtung,
Fig. 2 eine detaillierte, schematische Darstellung der Vorrichtung gemäß Fig. 1,
Fig. 3 eine Fig. 2 entsprechende Darstellung einer weiteren Ausführungsform der Vorrichtung.

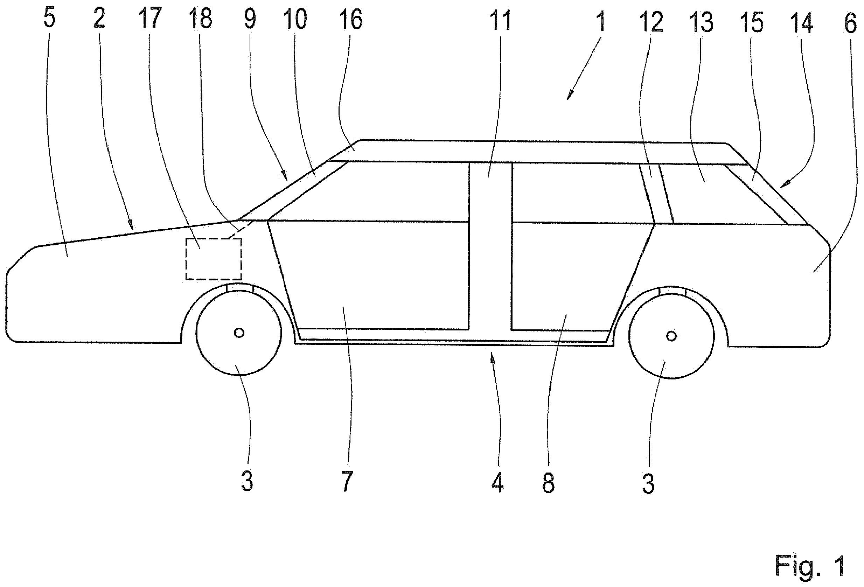

Einander entsprechende Teile sind in den Fig. 1 bis 3 mit denselben Bezugszeichen versehen. Auch Einzelheiten der im Folgenden näher erläuterten Ausführungsbeispiele können für sich genommen die Erfindung darstellen oder Teil des Erfindungsgegenstands sein.

Ein in Fig. 1 gezeigtes Fahrzeug 1 ist ein Kraftfahrzeug in Form eines Automobils. Das Fahrzeug 1 weist eine Karosserie 2 mit einem Fahrzeugrahmen und Rädern 3 auf. Die Karosserie 2 weist Außenteile auf wie beispielsweise einen vorderen Kotflügel 5, einen hinteren Kotflügel 6, eine vordere Tür 7 und eine hintere Tür 8. Die vordere Tür 7 und die hintere Tür 8 können Hohlvolumina aufweisen. Der Fahrzeugrahmen weist mehrere Fahrzeugrahmenelemente auf, insbesondere ein Einstiegsrahmenelement 4 in Form eines Schwellers. Der Schweller ist seitlich im Fußbereich der Karosserie 2 angeordnet und erstreckt sich insbesondere zwischen den Rädern 3.

Weitere Fahrzeugrahmenelemente sind ein Rahmen 9 um eine Frontscheibe. Der Rahmen 9 weist beidseitig jeweils eine sogenannte A-Säule 10 auf. Zwischen der vorderen Tür 7 und der hinteren Tür 8 ist ein Seitenrahmenelement 11 in Form einer B-Säule vorgesehen. Als hinterer Abschluss der hinteren Tür 8 dient ein weiteres Seitenrahmenelement 12 in Form einer sogenannten C-Säule. Das Seitenrahmenelement 12 kann auch als Rahmen einer Heckscheibe dienen, wenn das Fahrzeug 1 als Fahrzeug mit Stufenheck oder Fließheck ausgeführt ist. Das weitere Seitenrahmenelement 12 kann auch entfallen. In dem gezeigten Ausführungsbeispiel ist das Fahrzeug 1 ein Kombi-Fahrzeug, also mit vergrößertem Kofferraum 13. Entsprechend ist ein hinterer Rahmen 14 vorgesehen, in dem eine Heckscheibe aufgenommen ist. Der hintere Rahmen 14 weist beidseitig jeweils eine D-Säule 15 als Rahmenelement auf.

Die Fahrzeugrahmenelemente 4, 9, 10, 11, 12, 14, 15 sind jeweils als Hohlprofilelemente ausgeführt. Die Fahrzeugrahmenelemente 4, 9, 10, 11, 12, 14, 15 weisen jeweils ein Innenvolumen auf.

Das Fahrzeug 1 weist ein Fahrzeugdach 16 auf, das beispielsweise ein Innenvolumen aufweisen kann.

Im Kofferraum 13 können Hohlvolumina vorgesehen sein, die insbesondere als Stauraum nicht nutzbar sind. Der vordere Kotflügel 5 und der hintere Kotflügel 6 können an einer Innenseite, die insbesondere von außen nicht sichtbar ist, mit angebauten und/oder integrierten Hohlbehältern ausgeführt sein. Diese Hohlbehälter weisen Innenvolumina auf.

Die Fahrzeugrahmenelemente 4, 9, 10, 11, 12, 14, 15, die Fahrzeugtüren 7, 8, das Fahrzeugdach 16 sowie Anbauteile an den Kotflügeln 5, 6, im Kofferraum 13 und/oder an Tankelementen, insbesondere dem Kraftstofftank, zur Erzeugung zusätzlicher, insbesondere abgeschlossener, Hohlräume mit Innenvolumina, sind Fahrzeugkomponenten, die als Druckluftspeicherbehälter dienen können.

Das Fahrzeug 1 weist ferner ein Druckluftaggregat 17 auf. Mit dem Druckluftaggregat 17 kann Luft in Druckluft verdichtet werden. Das Druckluftaggregat 17 ist über eine Druckluftleitung 18 mit mindestens einer der Fahrzeugkomponenten 4 bis 16 verbunden. Aus Gründen der Übersichtlichkeit ist in Fig. 1 symbolisch eine Druckluftleitung 18 zur Verbindung des Druckluftaggregats 17 mit dem Rahmen 9 dargestellt.

Das Druckluftaggregat 17, die Druckluftleitung 18 und der durch die mindestens eine Fahrzeugkomponente gebildete Druckluftspeicherbehälter 4 bis 16 bilden eine Vorrichtung zum Umwandeln und Speichern von Energie für das Fahrzeug 1.

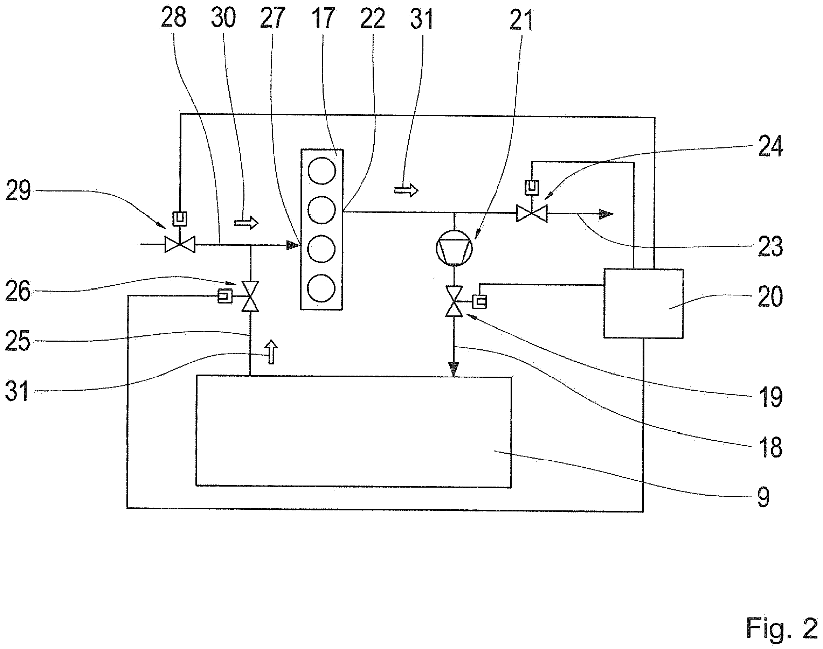

Nachfolgend wird anhand der Fig. 2 die Vorrichtung zum Umwandeln und Speichern von Energie näher erläutert. Gemäß dem gezeigten Ausführungsbeispiel ist das Druckluftaggregat 17 als Verbrennungsmotor des Fahrzeugs 1 ausgeführt. Der Verbrennungsmotor ist gemäß dem gezeigten Ausführungsbeispiel als 4-Zylinder-Motor ausgeführt. An einer Abgasöffnung an der Abgasseite ist die Druckluftleitung 18 am Verbrennungsmotor angeschlossen. Entlang der Druckluftleitung 18 ist ein Druckluft-Absperrventil 19 angeordnet. Das Druckluft-Absperrventil 19 dient zum schaltbaren Absperren der Druckluftleitung 18 zwischen dem Druckluftaggregat 17 und dem Druckluftspeicherbehälter 9 in Form des vorderen Rahmens für die Frontscheibe. Aus Darstellungsgründen sind die Bezugszeichen der weiteren Fahrzeugkomponenten, die als Druckluftspeicherbehälter genutzt werden können, in Fig. 2 nicht dargestellt. Es ist klar, dass anstelle des Rahmens 9 oder zusätzlich zu dem Rahmen 9 weitere Fahrzeugkomponenten als Druckluftspeicherbehälter genutzt werden und mit der Druckluftleitung 18 verbunden sein können.

Zum Schalten des Druckluft-Absperrventils 19 ist dieses mit einer zentralen Steuereinheit 20 in Signalverbindung.

Die Vorrichtung weist ferner ein Zusatz-Verdichtungselement 21 auf, um die mittels des Druckluftaggregats 17 verdichtete Druckluft zusätzlich und insbesondere nachtäglich zu verdichten. Es ist also eine zweistufige Verdichtung möglich. Das Zusatz-Verdichtungselement 21 ist gemäß dem gezeigten Ausführungsbeispiel eine separate, also zusätzliche Komponente beispielsweise in Form einer Pumpe oder eines Kompressors. Es ist aber auch möglich, dass als Zusatz-Verdichtungselement 21 eine bereits im Fahrzeug 1 vorhandene Komponente genutzt wird. Gemäß dem gezeigten Ausführungsbeispiel ist das Zusatz-Verdichtungselement 21 zwischen dem Druckluftaggregat 17 und dem Druckluft-Absperrventil 19 entlang der Druckluftleitung 18 angeordnet. Das bedeutet, dass das Zusatz-Verdichtungselement 21 entlang einer Druckluftströmungsrichtung dem Druckluft-Absperrventil 19 vorgelagert ist. Das Zusatz-Verdichtungselement 21 kann auch dem Druckluft-Absperrventil 19 nachgelagert sein. Das Zusatz-Verdichtungselement 21 kann insbesondere zwischen dem Druckluft-Absperrventil 19 und dem Druckluftspeicherbehälter 9 angeordnet sein.

Wesentlich ist, dass das Zusatz-Verdichtungselement 21 entlang der Druckluftleitung 18 zwischen dem Druckluftaggregat 17 und dem Druckluftspeicherbehälter 9 angeordnet ist.

Das Zusatz-Verdichtungselement 21 kann eine Einspeisung der Druckluft auch in Verbindung mit einem VTG-Turbolader über eine geeignete Schaltung der Ventile realisiert werden. Ein variabler Turbinen-Geometrie-(VTG-)Lader kann die ausströmenden Gase zurückstauen, um diese in den Druckspeicherbehälter 9 einleiten zu können. Alternativ könnte die Einleitung der Gase in den Druckspeicherbehälter 9 mittels einer nicht dargestellten Abgasbremsklappe geschehen.

An der Abgasöffnung 22 des Verbrennungsmotors ist eine Abgasleitung 23 angeschlossen. Entlang der Abgasleitung 23 ist ein schaltbares Abgas-Absperrventil 24 zum Absperren der Abgasleitung 23 angeordnet. Das Abgas-Absperrventil 24 steht mit der Steuereinheit 20 in Signalverbindung.

An der Abgasöffnung 22 des Druckluftaggregats 17 ist gemäß dem gezeigten Ausführungsbeispiel in Fig. 2 eine einzige Leitung angeschlossen, die sich anschließend in die Abgasleitung 23 und die Druckluftleitung 18 aufzweigt. Der apparative Aufbau und Aufwand für die Vorrichtung ist reduziert.

Von dem Druckluftspeicherbehälter 9 führt eine Rückführleitung 25 zurück zu dem Verbrennungsmotor. Die Rückführleitung 25 ist eine von der Druckluftleitung 18 separat ausgeführte Leitung. Die Rückführleitung 25 dient zum Rückführen von gespeicherter Druckluft aus dem Druckluftspeicherbehälter 9 in den Verbrennungsmotor. Entlang der Rückführleitung 25 ist ein schaltbares Rückführ-Absperrventil 26 zum Absperren der Rückführleitung 25 angeordnet. Das Rückführ-Absperrventil 26 steht mit der Steuereinheit 20 in Signalverbindung. Die Rückführleitung 25 ist über eine Zuführöffnung 25 an den Verbrennungsmotor angeschlossen.

Die Vorrichtung weist eine Ansaugleitung 28 auf, die an der Zuführöffnung 27 an den Verbrennungsmotor angeschlossen ist. Die Ansaugleitung 28 ist insbesondere an die Rückführleitung 25 angeschlossen. Entlang der Ansaugleitung 28 ist ein schaltbares Ansaug-Absperrventil 29 angeordnet. Das Ansaug-Absperrventil 29 steht mit der Steuereinheit 20 in Signalverbindung.

Das Abgas-Absperrventil 24 dient zum Absperren des Abgases.

Das Druckluft-Absperrventil 19 dient zum Füllen des Druckluftspeicherbehälters 9.

Das Rückführ-Absperrventil 26 dient zum Absperren des Ansaugkanals. Das Rückführ-Absperrventil 26 ist insbesondere durch eine Klappe realisiert.

Das Ansaug-Absperrventil 29 dient zum Ablassen in den Ansaugkanal.

Nachfolgend wird die Funktion der Vorrichtung gemäß Fig. 2 näher erläutert. Zur Umwandlung und Speicherung von Energie wird das Abgas-Absperrventil 24 geschlossen. Luft 30 wird über das Ansaug-Absperrventil 29 und die Ansaugleitung 28 in den Verbrennungsmotor als Druckluftaggregat 17 angesaugt. Mittels einer Kolbenabschaltung im Verbrennungsmotor wird die Luft 30 zu Druckluft 31 verdichtet. Während des Verdichtens der Luft im Druckluftaggregat 17 sind alle Ventile, also insbesondere das Druckluft-Absperrventil 19, das Abgas-Absperrventil 24, das Rückführ-Absperrventil 26 und das Ansaug-Absperrventil 29, geschlossen. Nachdem der Verdichtungsvorgang im Druckluftaggregat 17 abgeschlossen ist, wird das Druckluft-Absperrventil 19 geöffnet. Druckluft 31 wird aus dem Druckluftaggregat 17 über die Druckluftleitung 18 in den Druckluftspeicherbehälter 9 eingelagert und dort gespeichert. Anschließend wird das Druckluft-Absperrventil 19 geschlossen. Ein unbeabsichtigtes Entweichen der Druckluft 31 aus dem Druckluftspeicherbehälter 9 ist verhindert.

Um die in der Druckluft 31 gespeicherte Energie für das Fahrzeug 1 zu nutzen, wird das Rückführ-Absperrventil 26 geöffnet. Die gespeicherte Druckluft 31 wird dem Verbrennungsmotor über die Rückführleitung 25 zugeführt. Die zugeführte Druckluft dient als Booster für den Verbrennungsprozess im Verbrennungsmotor. Die zugeführte Druckluft wirkt wie ein Turboersatz für den Verbrennungsmotor. Die Druckluft 31 bewirkt, dass der Zylinder im Verbrennungsmotor beim Ansaugen zusätzlich nach unten gedrückt wird. Die Verlagerung des Zylinders nach unten kann deshalb mit reduziertem und insbesondere ohne zusätzlichen Energieaufwand erfolgen. Insbesondere wird das Nachuntendrücken des Zylinders im Verbrennungsmotor ausschließlich durch die von der Druckluft zugeführte Energie gewährleistet. Insbesondere ist es dadurch ermöglicht, dass der Verbrennungsmotor unmittelbar ein erhöhtes Drehmoment zur Verfügung stellt.

Alternativ ist es denkbar, dass in Folge des Injektor-/Bernulli-Prinzips durch das Einsaugen der Druckluft 31 umliegende Luft mitgerissen wird, so dass die Füllung der Zylinder im Verbrennungsmotor verbessert ist. Daraus resultiert ein verbesserter Wirkungsgrad und damit eine erhöhte Leistung des Verbrennungsmotors.

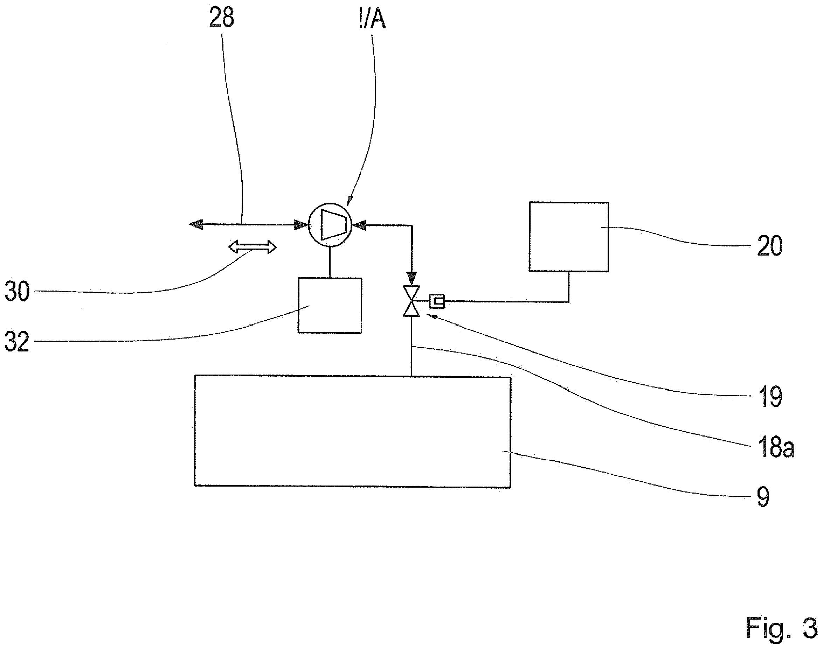

Nachfolgend wird anhand von Fig. 3 eine weitere Ausführungsform einer Vorrichtung erläutert. Der wesentliche Unterschied gegenüber dem vorstehenden Ausführungsbeispiel besteht darin, dass das Druckluftaggregat 17a als Verdichtungselement in Form einer Pumpe ausgeführt ist. Die Druckluftleitung 18a ist zur bidirektionalen Druckluftförderung geeignet. Eine separate Rückführleitung ist entbehrlich. Mit dem Druckluftaggregat 17a ist ein Generator 32 verbunden, der geeignet ist, kinetische Energie des Druckluftaggregats 17a in elektrische Energie zu wandeln.

Wenn in dem Fahrzeug 1 überschüssige kinetische Energie anfällt, kann diese mittels Rekuperation in elektrische Energie gewandelt werden. Die elektrische Energie kann genutzt werden, um über den Generator 32, der auch als Antriebsmotor betrieben werden kann, das Druckluftaggregat 17a in Form der Pumpe zu betreiben. Durch Betreiben der Pumpe wird Luft über die Ansaugleitung 28 angesaugt, in der Pumpe verdichtet und als Druckluft 31 über die Druckluftleitung 18a dem Druckluftspeicherbehälter 9 zugeführt und gespeichert. Bei Energiebedarf wird die Druckluft 31 aus dem Druckluftspeicherbehälter 9 durch Öffnen des Druckluft-Absperrventils 19 in entgegengesetzter Richtung entlang der Druckluftleitung 18a dem Druckluftaggregat 17a wieder zugeführt. Das Druckluftaggregat 17a ist derart ausgeführt, dass es in einer der Verdichtungsrichtung umgekehrten Richtung antreibbar ist. Die sich entspannende Druckluft 31 kann insbesondere ein drehbares Elements das Druckluftaggegrats 17a drehbar antreiben. Diese Drehbewegung im Druckluftaggregat 17a kann mittels des Generators 32 in elektrische Energie umgewandelt und dem Fahrzeug 1 zur Verfügung gestellt werden. Die entspannte Luft 30 kann über die Ansaugleitung 28 wieder ausgeblasen werden. Die Ansaugleitung 28 ermöglicht eine Luftförderung bidirektional. Eine separate Abgasleitung ist entbehrlich.

Es ist auch denkbar, das Druckluftaggregat 17a als Kompressor auszuführen. Die kinetische Energie der sich entspannenden Druckluft kann dann beispielsweise über das Expansionsvolumen genutzt werden.

### Bezugszeichen

- 1: Fahrzeug
- 2: Karosserie
- 3: Rad
- 4: Schweller (Fahrzeugkomponente)
- 5: vorderer Kotflügel (Fahrzeugkomponente)
- 6: hinterer Kotflügel (Fahrzeugkomponente)
- 7: vordere Tür (Fahrzeugkomponente)
- 8: hintere Tür (Fahrzeugkomponente)
- 9: Rahmen (Fahrzeugkomponente)
- 10: A-Säule (Fahrzeugkomponente)
- 11: B-Säule (Fahrzeugkomponente)
- 12: C-Säule (Fahrzeugkomponente)
- 13: Kofferraum (Fahrzeugkomponente)
- 14: hinterer Rahmen (Fahrzeugkomponente)
- 15: D-Säule (Fahrzeugkomponente)
- 16: Fahrzeugdach (Fahrzeugkomponente)
- 17: Druckluftaggregat
- 18: Druckluftleitung
- 19: Druckluft-Absperrventil
- 20: Steuereinheit
- 21: Zusatz-Verdichtungselement
- 22: Abgasöffnung
- 23: Abgasleitung
- 24: Abgas-Absperrventil
- 25: Rückführleitung
- 26: Rückführ-Absperrventil
- 27: Zuführöffnung
- 28: Ansaugleitung
- 29: Ansaug-Absperrventil
- 30: Luft
- 31: Druckluft
- 32: Generator

## Patentansprüche

1. Vorrichtung zum Umwandeln und Speichern von Energie für ein Fahrzeug (1) umfassend
a. ein Druckluftaggregat (17; 17a) zum Verdichten von Luft (30) in Druckluft (31),
b. ein mit dem Druckluftaggregat (17; 17a) über eine Druckluftleitung (18; 18a) verbundener Druckluftspeicherbehälter zum Speichern der Druckluft (31), **dadurch gekennzeichnet, dass** der Druckluftspeicherbehälter durch mindestens eine Fahrzeugkomponente gebildet ist.

2. Vorrichtung gemäß Anspruch 1, **dadurch gekennzeichnet, dass** die mindestens eine Fahrzeugkomponente ein Fahrzeugrahmenelement, insbesondere ein Einstiegsrahmenelement (4), ein vorderer Rahmen (9) für eine Frontscheibe, ein hinterer Rahmen (14) für eine Heckscheibe, ein Seitenrahmenelement (11, 12), und/oder eine Fahrzeugtür (6, 7) ist.

3. Vorrichtung gemäß einem der vorstehenden Ansprüche, **gekennzeichnet durch** ein entlang der Druckluftleitung (18; 18a) angeordnetes Druckluft-Absperrventil (19) zum, insbesondere schaltbaren, Absperren der Druckluftleitung (18; 18a) zwischen dem Druckluftaggregat (17; 17a) und dem Druckluftspeicherbehälter.

4. Vorrichtung gemäß einem der vorstehenden Ansprüche, **gekennzeichnet durch** ein Zusatz-Verdichtungselement (21) zum zusätzlichen Verdichten der zu speichernden Druckluft (31) aus dem Druckluftaggregat (17; 17a), wobei insbesondere das Zusatz-Verdichtungselement (21) entlang der Druckluftleitung (18; 18a) zwischen dem Druckluftaggregat (17; 17a) und dem Druckluftspeicherbehälter angeordnet ist.

5. Vorrichtung gemäß einem der vorstehenden Ansprüche, **dadurch gekennzeichnet, dass** das Druckluftaggregat (17) ein Verbrennungsmotor des Fahrzeugs (1) ist.

6. Vorrichtung gemäß Anspruch 5, **gekennzeichnet durch** eine an den Verbrennungsmotor, insbesondere an die Druckluftleitung (18), angeschlossene Abgasleitung (23), entlang der insbesondere ein Abgas-Absperrventil (24) zum, insbesondere schaltbaren, Absperren der Abgasleitung (23) angeordnet ist.

7. Vorrichtung gemäß Anspruch 5 oder 6, **gekennzeichnet durch** eine zwischen dem Druckluftspeicherbehälter und dem Verbrennungsmotor angeordnete Rückführleitung (25) zum Rückführen von gespeicherter Druckluft (31), wobei entlang der Rückführleitung (25) insbesondere ein Rückführ-Absperrventil (26) zum, insbesondere schaltbaren, Absperren der Rückführleitung (25) vorgesehen ist.

8. Vorrichtung gemäß einem der Ansprüche 5 bis 7, **gekennzeichnet durch** eine an den Verbrennungsmotor, insbesondere an die Rückführleitung (25), angeschlossene Ansaugleitung (28), entlang der insbesondere ein Ansaug-Absperrventil (29) zum, insbesondere schaltbaren, Absperren der Ansaugleitung (28) angeordnet ist.

9. Vorrichtung gemäß einem der Ansprüche 1 bis 4, **dadurch gekennzeichnet, dass** das Druckluftaggregat (17a) ein Verdichtungselement, insbesondere eine Pumpe, ein Kompressor oder ein Verdichter, ist.

10. Vorrichtung gemäß Anspruch 9, **dadurch gekennzeichnet, dass** die Druckluftleitung (18a) zur bidirektionalen Druckluftförderung ausgeführt ist.

11. Vorrichtung gemäß Anspruch 9 oder 10, **gekennzeichnet durch** einen mit dem Druckluftaggregat (17a) verbundenen Generator (32) zum Umwandeln der in der Druckluft (31) gespeicherten kinetischen Energie in elektrische Energie.

12. Fahrzeug (1) mit einer Vorrichtung gemäß einem der vorstehenden Ansprüche.

13. Verfahren zum Umwandeln und Speichern von Energie für ein Fahrzeug (1) umfassend die Verfahrensschritte
- Rekuperieren von überschüssiger Energie des Fahrzeugs (1) durch Verdichten von Luft (30) in Druckluft (31) in einem Druckluftaggregat (17; 17a),
- Speichern der Druckluft (31) in einem mit dem Druckluftaggregat (17; 17a) über eine Druckluftleitung (18; 18a) verbundenen Druckluftspeicherbehälter.

14. Verfahren gemäß Anspruch 13, **gekennzeichnet durch** Rückführen der gespeicherten Druckluft (31) aus dem Druckluftspeicherbehälter in das Druckluftaggregat (17; 17a).

15. Verfahren gemäß Anspruch 13 oder 14, **gekennzeichnet durch** Umwandeln der gespeicherten Druckluft (31) in kinetische Energie und/oder in elektrische Energie mittels des Druckluftaggregats (17; 17a).
